# EUROPEAN PATENT APPLICATION

(11) **EP 2 464 133 A1**
(43) Date of publication of application: **13.06.2012**
(21) Application number: 11009421.6
(22) Date of filing: 29.11.2011
(51) Int. Cl.: H04N 21/2668, H04N 21/44, H04N 21/45, H04N 21/658, H04N 21/6587, H04N 21/438, H04N 21/81

(54) **Targeted advertisement distribution in an SDV environment**

(30) Priority: 07.12.2010 US 962306
(71) Applicant: General instrument Corporation, Horsham PA 19044 (US)
(72) Inventor: Del Sordo, Christopher S., Souderton Pennsylvania 18964 (US); Elcock, Albert F., West Chester Pennsylvania 19380 (US); Leary, Patrick J., Horsham Pennsylvania 19044 (US); Wang, Yeqing, Horsham Pennsylvania 19044 (US)
(74) Representative: Openshaw, Paul Malcolm

(57) **Abstract**

A system and method for distributing targeted advertisements in a switched digital video system. The method monitors a content stream associated with a channel selected by a subscriber, where the content stream includes an advertisement segment having a start time and an end time, and an advertisement replacement opportunity inserted in the content stream. The method detects the advertisement replacement opportunity at a detection time that is prior to the start time of the advertisement segment, and sends a request to select an advertisement replacement for the advertisement segment, thereby broadcasting a service associated with the advertisement replacement prior to the start time for the advertisement segment. The method receives tune data to identify an advertisement replacement stream associated with the advertisement replacement, and tunes to the advertisement replacement at the start time for the advertisement segment.

## Description

### BACKGROUND

A digital video broadcast system allows a multiple system operator (MSO) to deliver television programs and multimedia services to subscribers. The capacity, or bandwidth, of the system determines the programs and services that the MSO delivers. In legacy broadcast systems, the MSO sends all of the available programs and services to the subscriber's set-top box on a single cable. Thus, the only way to increase the programs and services available to subscribers in legacy broadcast systems is to increase the bandwidth.

A switched digital video (SDV) system is an improvement to the legacy broadcast systems. The SDV system requires less bandwidth to deliver high-bandwidth digital services by allowing the MSO to send only the content requested by a service group, where each service group includes a set of set-top boxes with visibility to a common set of switched edge quadrature amplitude modulator (QAM) devices. To make this possible, the subscriber's set-top box communicates with a network side video server to request the program that the subscriber wants to watch in real time. The SDV system responds by delivering the requested program to the subscriber's service group. Thus, the service group only receives the programs that subscribers in the service group are watching.

A current focus for the MSO is the development of targeted advertisement technology (*i.e.*, advertisements that are placed so as to reach consumers based on various traits, such as demographics, purchase history, observed behavior, or the like). One of the issues for the MSO is the need for network bandwidth to distribute the targeted advertisements. Even though the targeted advertisements are short in length, there is a need to have many different targeted advertisements to satisfy the various targeted population groups they need to serve. It is anticipated that as targeted advertisement technology grows, there will be an increase in the targeted advertisements distributed over the network. Furthermore, the need for bandwidth will increase because subscribers want the targeted advertisements to be in high-definition (HD) format (*i.e*., The Moving Picture Experts Group (MPEG) MPEG-4 or MPEG-2 high profile format). In addition, since these targeted advertisements generate a significant revenue stream for the MSO, the time delay to transition from a primary television program, to a targeted advertisement, and back to the primary television program is lost advertisement time that negatively impacts the revenue stream.

There is a demand for a method and system for distributing targeted advertisements in an SDV system that reduces the network bandwidth necessary for the distribution of HD and standard-definition (SD) targeted advertisements. The presently disclosed invention satisfies this demand.

### SUMMARY

Aspects of the present invention provide a system and method for distributing targeted advertisements in a switched digital video system. The method monitors a content stream associated with a channel selected by a subscriber, where the content stream includes an advertisement segment having a start time and an end time, and an advertisement replacement opportunity inserted in the content stream. The method detects the advertisement replacement opportunity at a detection time prior to the start time of the advertisement segment, and sends a request to select an advertisement replacement for the advertisement segment, thereby broadcasting a service associated with the advertisement replacement prior to the start time for the advertisement segment. The method receives tune data to identify an advertisement replacement stream associated with the advertisement replacement, and tunes to the advertisement replacement at the start time for the advertisement segment.

### BRIEF DESCRIPTION OF THE DRAWINGS

FIG. **1** is a message flow diagram that illustrates one embodiment of the hardware components of a system that performs the present invention.

FIG. **2** is a block diagram that illustrates, in detail, one embodiment of the hardware components shown in FIG. **1****.**

FIG. **3** is a message flow diagram that illustrates methods according to various embodiments of the present invention.

### DETAILED DESCRIPTION

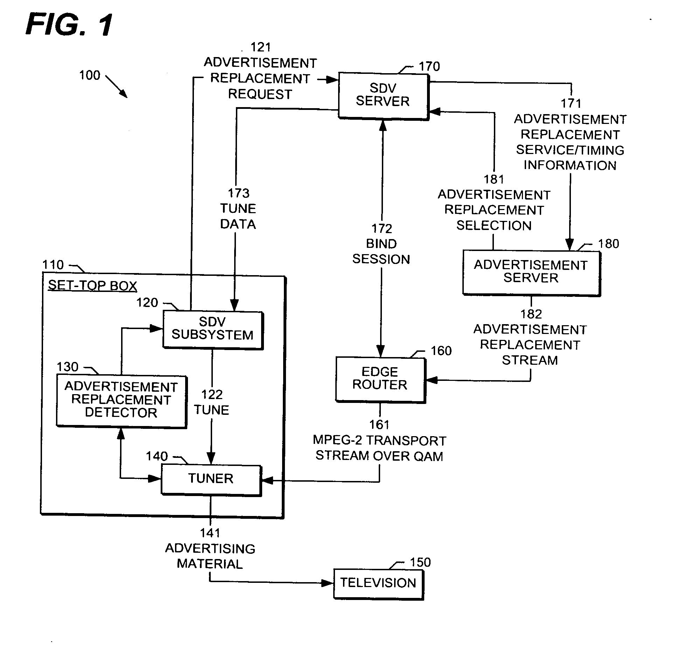

FIG. **1** is a message flow diagram that illustrates one embodiment of the hardware components of a system that performs the present invention. A switched digital video (SDV) system **100** includes a set-top box **110,** television **150,** edge router **160,** SDV server **170,** and advertisement server **180.** In one embodiment, a network (not shown), such as a hybrid-fiber coaxial (HFC) network, connects the set-top box **110** and the television **150** to the edge router **160,** SDV server **170,** and the advertisement server **180.** In another embodiment, a network (not shown) connects the advertisement server **180** to the edge router **160** and SDV server **170.**

The set-top box **110** is a computing device that connects the television **150** and an external signal source, turning the signal into a content stream that the television **150** displays. The set-top box **110** shown in FIG. **1** includes an SDV subsystem **120,** advertisement replacement detector **130,** and tuner **140.**

The edge router **160** is a computing device that transfers data between a local area network and a wide area network, choosing the most effective paths to use when sending or receiving data. The edge router **160** shown in FIG. **1** includes quadrature amplitude modulators (QAMs) that enable the transmission of a multiplex of digital streams via a radio-frequency (RF) carrier.

The SDV server **170** is a computing device that receives channel change requests for switched content from the set-top box **110,** binds that content to a session on the edge router **160** that is associated with a QAM feeding the service group for the set-top box **110,** and responds to the set-top box **110** with the frequency and program number where the content may be found.

The system shown in FIG. **1** utilizes an SDV environment to send a targeted advertisement. In one embodiment, the targeted advertisement is a replacement for the primary network advertisement that is typically shown during a television program or between two television programs. One benefit of using the SDV environment to send targeted advertisements is that targeted advertisements are not required to be transmitted on the network in a continuous manner, and can be switched in based on an insertion decision made by the targeted advertisement decision engine. The decision of which targeted advertisement to select and insert is made prior to the insertion of the targeted advertisement.

The transition from a television program to a targeted advertisement is actually a service acquisition. Since the time needed to insert the targeted advertisement in the SDV system can be greater than the service acquisition time, it is possible that the consumer may miss part of the advertisement when the advertisement starts. Therefore, it is important to first make sure the advertisement is being broadcast prior to acquiring the targeted advertisement service. The present invention minimizes the time delay to transition from a primary television program, to a targeted advertisement, and back to the primary television program, thereby avoiding the loss of advertisement time (*i.e.*, lost revenue for the MSO).

The SDV system shown in FIG. **1** saves network bandwidth because it only streams the replacement targeted advertisement to those set-top boxes **110** that indicate an advertisement replacement opportunity. Furthermore, it only consumes bandwidth if the end user actually plays the replacement targeted advertisement. The present invention removes the need in the prior art to pre-position replacement targeted advertisements (*e.g*., on a disk associated with the set-top box **110).**

In one embodiment of the SDV system shown in FIG. **1****,** a subscriber uses the set-top box **110** to request a content stream to view on the television **150.** The SDV server **170** receives the request for the content stream from the SDV subsystem **120** of the set-top box **110.** When the content stream is available, the SDV server **170** will bind a session to the edge router **160** for delivery of the content stream. The edge router **160** then delivers the content stream, as MPEG-2 transport stream over QAM **161,** to the tuner **140** which will display the content stream on the television **150.**

The advertisement replacement detector **130** shown in FIG. **1** monitors the content streams that the tuner **140** receives to detect an opportunity for advertisement replacement. In one embodiment, the advertisement replacement detector **130** detects a trigger in the content stream that indicates that an advertisement transition will occur, where the advertisement server **180** inserted the trigger into the content stream, and the SDV server **170** forwarded the content stream with the trigger to the set-top box **110** via the edge router **160.** In another embodiment, the advertisement replacement detector **130** detects a splice point in the content stream that indicates that an advertisement transition will occur. When such an advertisement replacement opportunity occurs, the advertisement replacement detector **130** sends a notification to the SDV subsystem **120.** The notification instructs the SDV subsystem **120** to send an advertisement replacement request **121** message to the SDV server **170.** In response, the SDV server **170** sends advertisement replacement service/timing information **171** to the advertisement server **180.** In one embodiment, the advertisement replacement service/timing information **171** provides advertisement replacement information that indicates when to start playing the advertisement. In another embodiment, the advertisement replacement service/timing information **171** provides advertisement replacement information that indicates how to acquire the service. In another embodiment, the advertisement replacement message and the advertisement replacement service/timing information **171** include demographic information for the subscriber, time duration for the advertisement segment, identification information for the subscriber, purchasing preferences, and the like that help the advertisement server **180** to select an advertisement that will target the subscriber or an event or occasion.

In response to the receipt of the advertisement replacement service/timing information **171,** the advertisement server **180** prepares an advertisement replacement to present to the subscriber. In one embodiment, the advertisement replacement service/timing information **171,** which includes the subscriber's characteristics and preferences (*i.e.*, demographic information, timing information, identification information, purchasing preferences, and the like), is input to a decision engine that the advertisement server **180** uses to select an appropriate advertisement replacement. The advertisement server **180** sends an advertisement replacement selection **181** message to the SDV server **170.** In one embodiment, the advertisement replacement selection **181** message informs the SDV server **170** of the service information of the advertisement replacement. The SDV server **170** establishes a bind session **172** with the edge router **160,** proceeds to broadcast the advertisement replacement, and learns the tuning information needed for the set-top box **110** tune to be successful. The SDV server **170** sends a tune data **173** message to the SDV subsystem **120** to provide the tuning information to the set-top box **110.** In one embodiment, the tune data **173** message includes timing information to synchronize the set-top box **110** tune with the playing of the replacement target advertisement that the advertisement server **180** provides as an advertisement replacement stream **182** to the edge router **160.** In another embodiment, the tune data **173** is a message that can contain timing information which the set-top box **110** evaluates to decide when to tune, or the SDV server **170** can transmit the message with precise timing where the set-top box **110** reacts immediately on the receipt of the message. When the SDV subsystem **120** in the set-top box **110** receives the tune data **173** message, it sends a tune **122** message to the tuner **140** to tune to the replacement target advertisement so that advertising material **141** is displayed on the television 150.

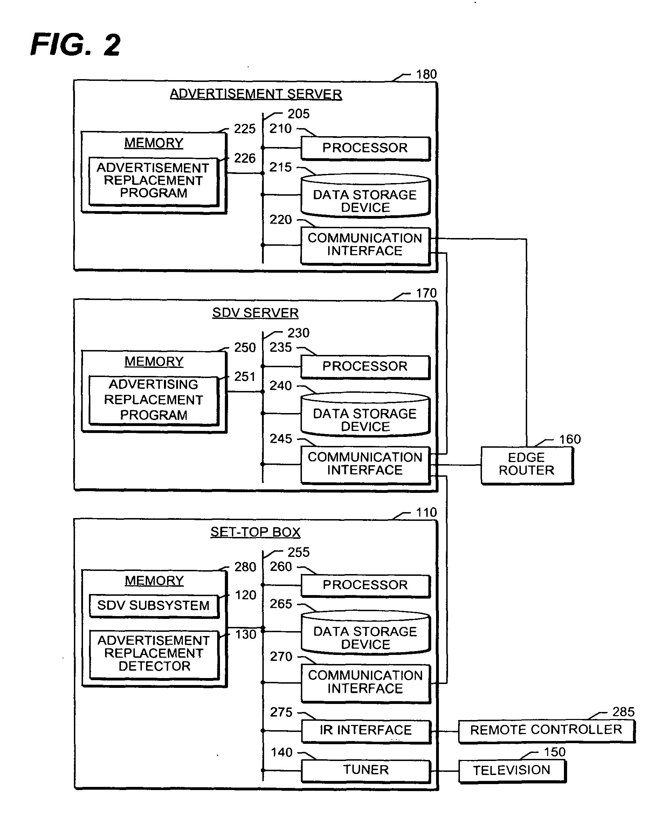

FIG. **2** is a block diagram that illustrates, in detail, one embodiment of the hardware components shown in FIG. **1****.** In particular, FIG. **2** illustrates the hardware components and software comprising the advertisement server **180,** SDV server **170,** and set-top box **110** shown in FIG. **1****.**

The advertisement server **180,** in one embodiment, is a general-purpose computing device that performs the present invention. A bus **205** is a communication medium that connects a processor **210,** data storage device **215** (such as a Serial ATA (SATA) hard disk drive, optical drive, Small Computer System Interface (SCSI) disk, flash memory, or the like), communication interface **220,** and memory **225** (such as Random Access Memory (RAM), Dynamic RAM (DRAM), non-volatile computer memory, flash memory, or the like). The communication interface **220** connects the advertisement server **180** to the edge router **160** and the SDV server **170.** In one embodiment, the implementation of the present invention on the advertisement server **180** is an application-specific integrated circuit (ASIC).

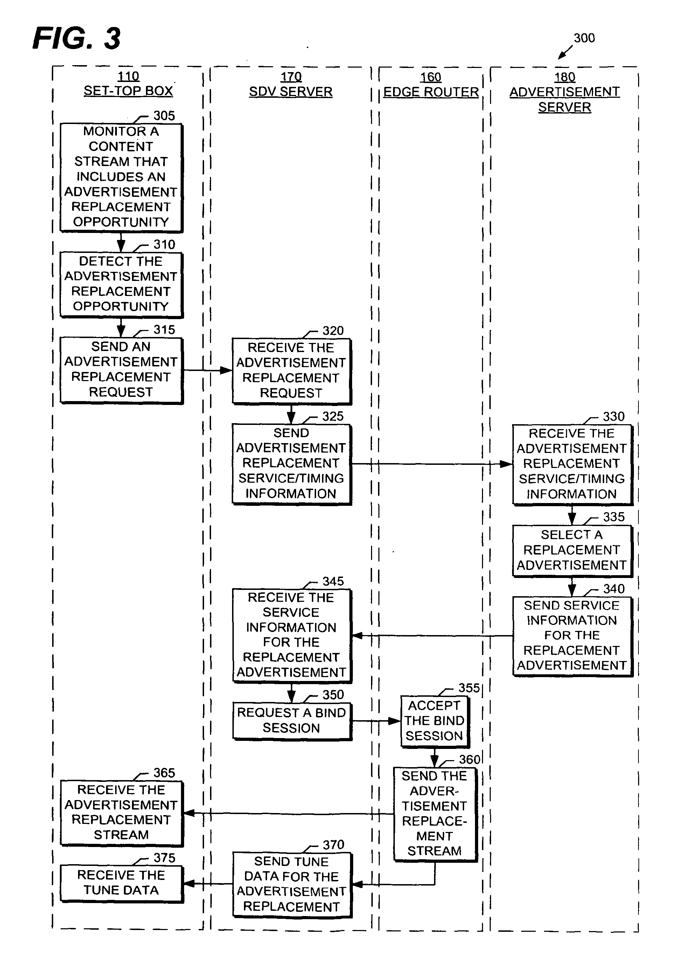

The processor **210** performs the disclosed methods by executing the sequences of operational instructions that comprise each computer program resident in, or operative on, the memory **225.** The reader should understand that the memory **225** may include operating system, administrative, and database programs that support the programs disclosed in this application. In one embodiment, the configuration of the memory **225** of the advertisement server **180** includes an advertisement replacement program **226** that performs the methods of the present invention disclosed in detail in FIG. **1** and FIG. **3****.** When the processor **210** performs the disclosed methods, it stores intermediate results in the memory **225** or data storage device **215.** In another embodiment, the memory **225** may swap these programs, or portions thereof, in and out of the memory **225** as needed, and thus may include fewer than all of these programs at any one time.

The SDV server **170,** in one embodiment, is a general-purpose computing device that performs the present invention. A bus **230** is a communication medium that connects a processor **235,** data storage device **240** (such as a Serial ATA (SATA) hard disk drive, optical drive, Small Computer System Interface (SCSI) disk, flash memory, or the like), communication interface **245,** and memory **250** (such as Random Access Memory (RAM), Dynamic RAM (DRAM), non-volatile computer memory, flash memory, or the like). The communication interface **245** connects the SDV server **170** to the advertisement server **180,** edge router **160,** and set-top box **110.** In one embodiment, the implementation of the present invention on the SDV server **170** is an application-specific integrated circuit (ASIC).

The processor **235** performs the disclosed methods by executing the sequences of operational instructions that comprise each computer program resident in, or operative on, the memory **250.** The reader should understand that the memory **250** may include operating system, administrative, and database programs that support the programs disclosed in this application. In one embodiment, the configuration of the memory **250** of the SDV server **170** includes an advertisement replacement program **251** that performs the methods of the present invention disclosed in detail in FIG. **1** and FIG. **3****.** When the processor 235 performs the disclosed methods, it stores intermediate results in the memory **250** or data storage device **240.** In another embodiment, the memory **250** may swap these programs, or portions thereof, in and out of the memory **250** as needed, and thus may include fewer than all of these programs at any one time.

The set-top box **110,** in one embodiment, is a general-purpose computing device that performs the present invention. A bus **255** is a communication medium that connects a processor **260,** data storage device **265** (such as a Serial ATA (SATA) hard disk drive, optical drive, Small Computer System Interface (SCSI) disk, flash memory, or the like), communication interface **270,** infrared (IR) interface **275,** tuner **140,** and memory **280** (such as Random Access Memory (RAM), Dynamic RAM (DRAM), non-volatile computer memory, flash memory, or the like). The communication interface **270** connects the set-top box **110** to the SDV server **170.** The IR interface **275** connects the set-top box **110** to a remote controller **285.** The tuner **140** connects the set-top box **110** to a display device such as a television **150,** and sends the video content that the television **150** screen displays. In one embodiment, the implementation of the present invention on the set-top box **110** is an application-specific integrated circuit (ASIC).

The processor **260** performs the disclosed methods by executing the sequences of operational instructions that comprise each computer program resident in, or operative on, the memory **280.** The reader should understand that the memory **280** may include operating system, administrative, and database programs that support the programs disclosed in this application. In one embodiment, the configuration of the memory **280** of the set-top box **110** includes an SDV subsystem **120,** and advertisement replacement detector **130** that perform the methods of the present invention disclosed in detail in FIG. **1** and FIG. **3****.** When the processor **260** performs the disclosed methods, it stores intermediate results in the memory **280** or data storage device **265.** In another embodiment, the memory **280** may swap these programs, or portions thereof, in and out of the memory **280** as needed, and thus may include fewer than all of these programs at any one time.

FIG. **3** is a flow diagram that illustrates a method according to one embodiment of the present invention. In particular, FIG. **3** illustrates the communication between the set-top box **110,** SDV server **170,** edge router **160,** and advertisement server **180.**

The process **300** shown in FIG. **3****,** with reference to FIG. **1** and FIG. **2****,** begins when the set-top box **110** monitors a content stream that includes an advertisement replacement opportunity (step **305)** inserted in the content stream. The tuner **140** for the set-top box **110** is receiving the content stream in response to a request from a subscriber to tune the set-top box **110** to a channel in an SDV system. The process **300** monitors the content stream by examining each transport stream packet that makes up the content stream to detect an advertisement replacement opportunity (*i.e*., an indication that an upcoming advertisement segment in the content stream provides an opportunity to substitute a replacement advertisement for the primary advertisement). In one embodiment, the advertisement replacement opportunity is a trigger that the advertisement server **180** inserts into the content stream. When the process **300** encounters a trigger in the content stream, it examines the trigger to identify a start time for the advertisement segment, end time for the advertisement segment, and service information for the advertisement segment. The trigger is an indicator of a transition of the content stream to a service for the advertisement segment, and provides a seamless transition when tuning to the advertisement segment. In another embodiment, the advertisement replacement opportunity is a splice point in the content stream. When the process **300** encounters the splice point in the content stream, it examines the splice point to identify a start time for the advertisement segment, end time for the advertisement segment, and advertisement replacement splice service information. The splice point is an indicator of a transition of the content stream to a service for the advertisement segment, and provides a seamless transition when tuning to the advertisement segment. When the process **300** detects an advertisement replacement opportunity in the content stream (step **310),** the SDV subsystem **120** of the set-top box **110** sends an advertisement replacement request **121** message to the SDV server **170** (step **315).** In one embodiment, the advertisement replacement request **121** message includes advertisement replacement service information, demographic information for the subscriber, time duration for the advertisement replacement segment, identification information for the subscriber, purchasing preferences, and the like.

The SDV server **170** receives the advertisement replacement request **121** message (step **320)** and sends advertisement replacement service/timing information **171** to the advertisement server **180** (step **325).** In one embodiment, the advertisement replacement service/timing information **171** includes advertisement replacement information that indicates when to start playing the advertisement. In another embodiment, the advertisement replacement service/timing information **171** provides advertisement replacement information that indicates how to acquire the service. In another embodiment, the advertisement replacement service/timing information **171** includes, demographic information for the subscriber, time duration for the advertisement segment, identification information for the subscriber, purchasing preferences, and the like.

The advertisement server **180** receives the advertisement replacement service/timing information **171** (step **330)** and selects a replacement message (step **335**). In one embodiment, the advertisement server **180** includes a decision engine to select a targeted advertisement as the replacement advertisement based on consideration of the subscriber's characteristics and preferences obtained from demographic information for the subscriber, time duration for the advertisement segment, identification information for the subscriber, purchasing preferences, and the like. Once the advertisement server **180** selects the replacement advertisement, the advertisement server **180** sends an advertisement replacement selection **181** message to the SDV server **170** to provide service information for the replacement advertisement to the SDV server **170** (step **340).** In one embodiment, the service information identifies the service and associated advertisement tuning information necessary for the SDV server **170** to set up the service and then indicates to the edge router **160** to begin broadcasting the replacement advertisement. In another embodiment, the advertisement server **180** also sends timing information for the replacement advertisement to instruct the SDV server **170** when to start playing the replacement advertisement, and the time duration for the replacement advertisement. This also results in the edge router **160** broadcasting the replacement advertisement.

The SDV server **170** receives the service information for the replacement advertisement in the advertisement replacement selection **181** message (step **345)** and sends a request to the edge router **160** for a bind session **172** (step **350).** The edge router **160** accepts the request for the bind session **172** (step 355) and prepares to route the replacement advertisement. The edge router **160** sends an advertisement replacement stream **182** that includes the advertisement replacement (step **360)** so that the tuner **140** on the set-top box **110** receives the advertisement replacement stream **182** (step **365)** prior to the start time for the advertisement replacement segment in the content stream. The edge router **160** signals the SDV server **170** that the session is bound. The SDV server **170** then sends tune data **173** for the advertisement replacement to the SDV subsystem **120** of the set-top box **110** (step **370).** In various embodiments, the tune data **173** includes a Moving Picture Experts Group service number, Internet Protocol multicast, a frequency, a service identifier, and the like. The set-top box **110** receives the tune data **173** (step **375)** and prepares the tuner **140** to synchronize the set-top box **110** with the playing of the advertisement replacement. In one embodiment, the tune data **173** includes timing information that the set-top box **110** evaluates and uses to determine when to tune to the advertisement replacement. In another embodiment, the tune data **173** includes precise timing and the set-top box **110** reacts immediately upon receipt of the tune data **173.**

Although the disclosed embodiments describe a fully functioning method and system for distributing targeted advertisements in an SDV system, the reader should understand that other equivalent embodiments exist. Since numerous modifications and variations will occur to those reviewing this disclosure, the method and system for distributing targeted advertisements in an SDV system is not limited to the exact construction and operation illustrated and disclosed. Accordingly, this disclosure intends all suitable modifications and equivalents to fall within the scope of the claims.
Further aspects of the invention are provided by the subject matter of the following clauses:
1. A method, comprising:
   monitoring a content stream associated with a channel in a switched digital video system, the content stream including an advertisement segment having a start time and an end time, and an advertisement replacement opportunity inserted in the content stream;
   detecting the advertisement replacement opportunity in the content stream at a detection time that is prior to the start time of the advertisement segment;
   sending a request to select an advertisement replacement for the advertisement segment, thereby causing a broadcast of a service associated with the advertisement replacement prior to the start time of the advertisement segment;
   receiving tune data to identify an advertisement replacement stream associated with the advertisement replacement; and
   tuning to the advertisement replacement stream at the start time for the advertisement segment.
2. The method of clause 1, wherein the content stream is a sequential content stream.
3. The method of clause 1, wherein the monitoring of the content stream further comprises:
   receiving the content stream as a time sequence of packets; and
   examining each packet.
4. The method of clause 1, wherein the detecting of the advertisement replacement opportunity further comprises:
   detecting at least one trigger in the content stream, said at least one trigger identifying the start time for the advertisement segment, the end time for the advertisement segment, and service information for the advertisement segment,
   wherein said at least one trigger is an indicator of a transition of the content stream to a service for the advertisement segment, and an opportunity to replace the advertisement segment with the advertisement replacement, and
   wherein said at least one trigger provides a seamless transition when tuning to the advertisement segment, or the advertisement replacement.
5. The method of clause 1, wherein the detecting of the advertisement replacement opportunity further comprises:
   detecting at least one splice point in the content stream, said at least one splice point identifying the start time for the advertisement segment, the end time for the advertisement segment, and advertisement replacement splice service information,
   wherein said at least one splice point is an indicator of a transition of the content stream to a service for the advertisement segment, and an opportunity to replace the advertisement segment with the advertisement replacement, and
   wherein said at least one splice point provides a seamless transition when tuning to the advertisement segment, or the advertisement replacement.
6. The method of clause 1, wherein the request to select the advertisement replacement for the advertisement segment includes at least one of demographic information for a subscriber to the content stream, a time duration for the advertisement segment, identification information for the subscriber, and purchasing preferences for the subscriber.
7. The method of clause 1, wherein the advertisement replacement is targeted to address a characteristic or a preference associated with a subscriber to the content stream.
8. The method of clause 1, wherein the tune data includes at least one of a Moving Picture Experts Group service number, Internet Protocol multicast, a frequency, and a service identifier.
9. The method of clause 1, wherein a time difference between the detection time and the start time of the advertisement segment is greater than a service set up time for the advertisement replacement stream.
10. A system, comprising:
   a memory device resident in a computing device; and
   a processor disposed in communication with the memory device, the processor configured to:
      monitor a content stream associated with a channel in a switched digital video system, the content stream including an advertisement segment having a start time and an end time, and an advertisement replacement opportunity inserted in the content stream;
      detect the advertisement replacement opportunity in the content stream at a detection time that is prior to the start time of the advertisement segment;
      send a request to select an advertisement replacement for the advertisement segment, thereby causing a broadcast of a service associated with the advertisement replacement prior to the start time of the advertisement segment;
      receive tune data to identify an advertisement replacement stream associated with the advertisement replacement; and
      tuning to the advertisement replacement stream at the start time for the advertisement segment.
11. The system of clause 10, wherein a time difference between the detection time and the start time of the advertisement segment is greater than a service set up time for the advertisement replacement stream.
12. A non-transitory computer-readable medium, comprising computer-executable instructions that, when executed on a computing device, perform steps of:
   monitoring a content stream associated with a channel in a switched digital video system, the content stream including an advertisement segment having a start time and an end time, and an advertisement replacement opportunity inserted in the content stream;
   detecting the advertisement replacement opportunity in the content stream at a detection time that is prior to the start time of the advertisement segment;
   sending a request to select an advertisement replacement for the advertisement segment, thereby causing a broadcast of a service associated with the advertisement replacement prior to the start time of the advertisement segment;
   receiving tune data to identify an advertisement replacement stream associated with the advertisement replacement; and
   tuning to the advertisement replacement stream at the start time for the advertisement segment.
13. A method, comprising:
   receiving a request to select an advertisement replacement for an advertisement segment of a content stream associated with a channel in a switched digital video system, the advertisement segment having a start time and an end time, wherein a receipt time of the request is prior to the start time for the advertisement segment;
   selecting the advertisement replacement for the advertisement segment;
   broadcasting a service associated with the advertisement replacement prior to the start time of the advertisement segment;
   sending tune data to identify an advertisement replacement stream associated with the advertisement replacement; and
   sending the advertisement replacement stream at the start time for the advertisement segment.
14. The method of clause 13, wherein the content stream is a sequential content stream.
15. The method of clause 13, wherein the request to select the advertisement replacement for the advertisement segment includes at least one of demographic information for a subscriber to the content stream, a time duration for the advertisement segment, identification information for the subscriber, and purchasing preferences for the subscriber.
16. The method of clause 13, wherein the advertisement replacement is targeted to address a characteristic or a preference associated with a subscriber to the content stream.
17. The method of clause 13, wherein a time difference between the receipt time of the request and the start time of the advertisement segment is greater than a service set up time for the advertisement replacement stream.
18. A system, comprising:
   a memory device resident in a computing device; and
   a processor disposed in communication with the memory device, the processor configured to:
      receive a request to select an advertisement replacement for an advertisement segment of a content stream associated with a channel in a switched digital video system, the advertisement segment having a start time and an end time, wherein a receipt time of the request is prior to the start time for the advertisement segment;
      select the advertisement replacement for the advertisement segment;
      broadcast a service associated with the advertisement replacement prior to the start time of the advertisement segment;
      send tune data to identify an advertisement replacement stream associated with the advertisement replacement; and
      send the advertisement replacement stream at the start time for the advertisement segment.
19. The system of clause 18, wherein a time difference between the receipt time of the request and the start time of the advertisement segment is greater than a service set up time for the advertisement replacement stream.
20. A non-transitory computer-readable medium, comprising computer-executable instructions that, when executed on a computing device, perform steps of:
   receiving a request to select an advertisement replacement for an advertisement segment of a content stream associated with a channel in a switched digital video system, the advertisement segment having a start time and an end time, wherein a receipt time of the request is prior to the start time for the advertisement segment;
   selecting the advertisement replacement for the advertisement segment;
   broadcasting a service associated with the advertisement replacement prior to the start time of the advertisement segment;
   sending tune data to identify an advertisement replacement stream associated with the advertisement replacement; and
   sending the advertisement replacement stream at the start time for the advertisement segment.

## Claims

1. A system, comprising:
a memory device resident in a computing device; and
a processor disposed in communication with the memory device, the processor configured to:
monitor a content stream associated with a channel in a switched digital video system, the content stream including an advertisement segment having a start time and an end time, and an advertisement replacement opportunity inserted in the content stream;
detect the advertisement replacement opportunity in the content stream at a detection time that is prior to the start time of the advertisement segment;
send a request to select an advertisement replacement for the advertisement segment, thereby causing a broadcast of a service associated with the advertisement replacement prior to the start time of the advertisement segment;
receive tune data to identify an advertisement replacement stream associated with the advertisement replacement; and
tuning to the advertisement replacement stream at the start time for the advertisement segment.

2. The system of claim 1, wherein the content stream is a sequential content stream.

3. The system of claim 1, wherein to monitor the content stream, the processor is further configured to:
receive the content stream as a time sequence of packets; and
examine each packet.

4. The system of claim 1, wherein to detect the advertisement replacement opportunity, the processor is further configured to:
detect at least one trigger in the content stream, said at least one trigger identifying the start time for the advertisement segment, the end time for the advertisement segment, and service information for the advertisement segment,
wherein said at least one trigger is an indicator of a transition of the content stream to a service for the advertisement segment, and an opportunity to replace the advertisement segment with the advertisement replacement, and
wherein said at least one trigger provides a seamless transition when tuning to the advertisement segment, or the advertisement replacement.

5. The system of claim 1, wherein to detect the advertisement replacement opportunity, the processor is further configured to:
detect at least one splice point in the content stream, said at least one splice point identifying the start time for the advertisement segment, the end time for the advertisement segment, and advertisement replacement splice service information,
wherein said at least one splice point is an indicator of a transition of the content stream to a service for the advertisement segment, and an opportunity to replace the advertisement segment with the advertisement replacement, and
wherein said at least one splice point provides a seamless transition when tuning to the advertisement segment, or the advertisement replacement.

6. The system of claim 1, wherein the request to select the advertisement replacement for the advertisement segment includes at least one of demographic information for a subscriber to the content stream, a time duration for the advertisement segment, identification information for the subscriber, and purchasing preferences for the subscriber.

7. The system of claim 1, wherein the advertisement replacement is targeted to address a characteristic or a preference associated with a subscriber to the content stream.

8. The system of claim 1, wherein the tune data includes at least one of a Moving Picture Experts Group service number, Internet Protocol multicast, a frequency, and a service identifier.

9. The system of claim 1, wherein a time difference between the detection time and the start time of the advertisement segment is greater than a service set up time for the advertisement replacement stream.

10. A non-transitory computer-readable medium, comprising computer-executable instructions that, when executed on a computing device, perform steps of:
monitoring a content stream associated with a channel in a switched digital video system, the content stream including an advertisement segment having a start time and an end time, and an advertisement replacement opportunity inserted in the content stream;
detecting the advertisement replacement opportunity in the content stream at a detection time that is prior to the start time of the advertisement segment;
sending a request to select an advertisement replacement for the advertisement segment, thereby causing a broadcast of a service associated with the advertisement replacement prior to the start time of the advertisement segment;
receiving tune data to identify an advertisement replacement stream associated with the advertisement replacement; and
tuning to the advertisement replacement stream at the start time for the advertisement segment.

11. The non-transitory computer-readable medium of claim 10, wherein a time difference between the detection time and the start time of the advertisement segment is greater than a service set up time for the advertisement replacement stream.

12. A system, comprising:
a memory device resident in a computing device; and
a processor disposed in communication with the memory device, the processor configured to:
receive a request to select an advertisement replacement for an advertisement segment of a content stream associated with a channel in a switched digital video system, the advertisement segment having a start time and an end time, wherein a receipt time of the request is prior to the start time for the advertisement segment;
select the advertisement replacement for the advertisement segment;
broadcast a service associated with the advertisement replacement prior to the start time of the advertisement segment;
send tune data to identify an advertisement replacement stream associated with the advertisement replacement; and
send the advertisement replacement stream at the start time for the advertisement segment.

13. The system of claim 12, wherein the content stream is a sequential content stream.

14. The system of claim 12, wherein the request to select the advertisement replacement for the advertisement segment includes at least one of demographic information for a subscriber to the content stream, a time duration for the advertisement segment, identification information for the subscriber, and purchasing preferences for the subscriber.

15. The system of claim 12, wherein the advertisement replacement is targeted to address a characteristic or a preference associated with a subscriber to the content stream.

16. The system of claim 12, wherein a time difference between the receipt time of the request and the start time of the advertisement segment is greater than a service set up time for the advertisement replacement stream.

17. A non-transitory computer-readable medium, comprising computer-executable instructions that, when executed on a computing device, perform steps of:
receiving a request to select an advertisement replacement for an advertisement segment of a content stream associated with a channel in a switched digital video system, the advertisement segment having a start time and an end time, wherein a receipt time of the request is prior to the start time for the advertisement segment;
selecting the advertisement replacement for the advertisement segment;
broadcasting a service associated with the advertisement replacement prior to the start time of the advertisement segment;
sending tune data to identify an advertisement replacement stream associated with the advertisement replacement; and
sending the advertisement replacement stream at the start time for the advertisement segment.

18. The non-transitory computer-readable medium of claim 17, wherein a time difference between the receipt time of the request and the start time of the advertisement segment is greater than a service set up time for the advertisement replacement stream.
